# EUROPÄISCHE PATENTSCHRIFT

(11) **EP 1 189 382 B1**
(45) Veröffentlichungstag und Bekanntmachung des Hinweises auf die Patenterteilung: **19.01.2005**
(21) Anmeldenummer: 01119277.0
(22) Anmeldetag: 09.08.2001
(51) Int. Cl.: H04L 12/24

(54) **Verfahren zur Ermittlung von Netzwerktopologien**
Method for determining network topologies
Méthode pour déterminer des topologies de réseau

(30) Priorität: 19.09.2000 DE 10046312
(43) Veröffentlichungstag der Anmeldung: 20.03.2002
(73) Patentinhaber: SIEMENS AKTIENGESELLSCHAFT, 80333 München (DE)
(72) Erfinder: Fieremans, Geert, 1730 Asse (BE)

(56) Entgegenhaltungen:
- EP-A- 0 511 851
- US-A- 5 485 578
- HOHBERG W: "HOW TO FIND BICONNECTED COMPONENTS IN DISTRIBUTED NETWORKS" JOURNAL OF PARALLEL AND DISTRIBUTED COMPUTING, ACADEMIC PRESS, DULUTH, MN, US, Bd. 9, Nr. 4, 1. August 1990 (1990-08-01), Seiten 374-386, XP000150599 ISSN: 0743-7315

## Beschreibung

Kommunikationsnetze bzw. Rechnernetze bestehen aus - beispielsweise durch Kommunikationsanlagen bzw. Datenverarbeitungseinrichtungen gebildete - Netzknoten und aus den die einzelnen Netzknoten untereinander verbindenden Verbindungsleitungen. Hierbei sind eine Vielzahl von unterschiedlichen Netzwerkstrukturen (in der Literatur auch als Netzwerktopologien bezeichnet), wie beispielweise ein Stern-Netzwerk, ein Ring-Netzwerk, ein Baum-Netzwerk, ein Ketten-Netzwerk oder ein Bus-Netzwerk, bekannt.

Bei Netzwerken wird je nach Topologie des jeweiligen Netzwerks zwischen verbindungslosen und verbindungsorientierten Netzwerken unterschieden. In verbindungslosen Netzwerken entfällt eine einer Nachrichtenübermittlung zwischen den Netzwerken zugeordneten Kommunikationsendgeräten vorausgehende Signalisierungsphase, in deren Rahmen eine Verbindung zwischen den Kommunikationsendgeräten eingerichtet wird. In einem verbindungslosen Netzwerk - beispielsweise einem IPorientierten (Internet Protocol) Rechnernetz - wird ein zu übermittelndes Nachrichtenpaket an jedes dem Netzwerk zugeordnete Kommunikationsendgerät übermittelt. Die Entscheidung welches Kommunikationsendgerät das empfangene Nachrichtenpaket weiterverarbeitet bzw. verwirft wird durch den Empfänger des Nachrichtenpakets getroffen.

In einem verbindungsorientierten Netzwerk - beispielsweise einem ISDN-orientierten Kommunikationsnetz - in dem die Nachrichtenübermittlung von Netzknoten zu Netzknoten über eine im Rahmen einer Signalisierungsverbindung vorher eingerichteten Verbindung erfolgt, ist es für eine optimale Übermittlung einer Nachricht über das Netzwerk wichtig, die Netzwerktopologie zu kennen, d.h. eine Information darüber zu besitzen, wie die einzelnen Netzknoten untereinander verbunden sind.

Die Druckschrift HOHBERG W.: "How to Find Biconnected Components in Distributed Networks" - Journal of Parallel Distributed Computing, Academic Press, Duluth, MN, US, Bd. 9, Nr. 4, 1. August 1990, Seiten 374 - 376, zeigt ein Netzwerk, in dem die Netzknoten jeweils zwei Verbindungs-Schnittstellen zu anderen Netzknoten aufweisen. Zur Erfassung der Netzwerktopologie sendet eine erfassende Instanz jeweils eine Anforderungsnachricht zu jedem der Netzknoten, wobei jeder die Anforderungsnachricht empfangende Netzknoten in einer Antwortnachricht Informationen über seine Verbindungs-Schnittstellen zu seinen benachbarten Netzknoten zu der erfassenden Instanz zurücksendet.

Der vorliegenden Erfindung liegt daher die Aufgabe zugrunde, Verfahren vorzusehen, durch welche eine Ermittlung und Visualisierung von Netzwerktopologien, insbesondere für ein verbindungsorientiertes Netzwerk, ermöglicht wird.

Die Lösung dieser Aufgabe erfolgt für eine Ermittlung einer Netzwerktopologie erfindungsgemäß durch die Merkmale des Patentanspruchs 1.

Ein wesentlicher Vorteil der erfindungsgemäßen Verfahren besteht darin, daß ausgehend von einem beliebigen Netzknoten die Netzwerktopologie eines Netzwerks automatisch ermittelbar ist, und somit ausgehend von diesem Netzknoten eine optimale Übermittlung von Nachrichten - beispielsweise im Sinne von 'Least Cost Routing' - auf einfache und komfortable Weise ermöglicht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Übermittlung einer Anforderungsnachricht zur Ermittlung der Netzwerktopologie über eine Signalisierungsverbindung, insbesondere einen D-Kanal einer ISDN-orientierten Verbindung, innerhalb des Netzwerks - in der Literatur häufig als 'Temporary Signaling Connection', kurz TSC bezeichnet - nur geringe Übertragungskapazitäten innerhalb des Netzwerks belegt werden und auch keine Gebühren für die Ermittlung der Netzwerktopologie anfallen.

Eine Visualisierung einer ermittelten Netzwerktopologie ist erfindungsgemäß durch die Merkmale der Patentansprüche 8 bis 10 gegeben, wobei die ermittelte Netzwerkstruktur vorteilhaft in Form einer Baumstruktur dargestellt wird. Ein Ausführungsbeispiel der Erfindung wird im folgenden anhand der Zeichnung näher erläutert.

Dabei zeigen:
- Fig. 1:: ein Strukturbild zur schematischen Darstellung eines beispielhaften Netzwerks;
- Fig. 2a:: ein erstes Ablaufdiagramm zur Veranschaulichung der bei einer Ermittlung der Netzwerktopologie ablaufenden wesentlichen Verfahrensschritte;
- Fig. 2b:: ein zweites Ablaufdiagramm zur Veranschaulichung der bei einer Ermittlung der Netzwerktopologie ablaufenden wesentlichen Verfahrensschritte;
- Fig. 3:: eine die Netzwerktopologie des Netzwerks repräsentierende, Informationen über Netzknoten und Verbindungsleitungen des Netzwerks umfassende Tabelle; und
- Fig. 4:: ein Strukturbild zur Darstellung der Netzwerktopologie in Form einer Baumstruktur.

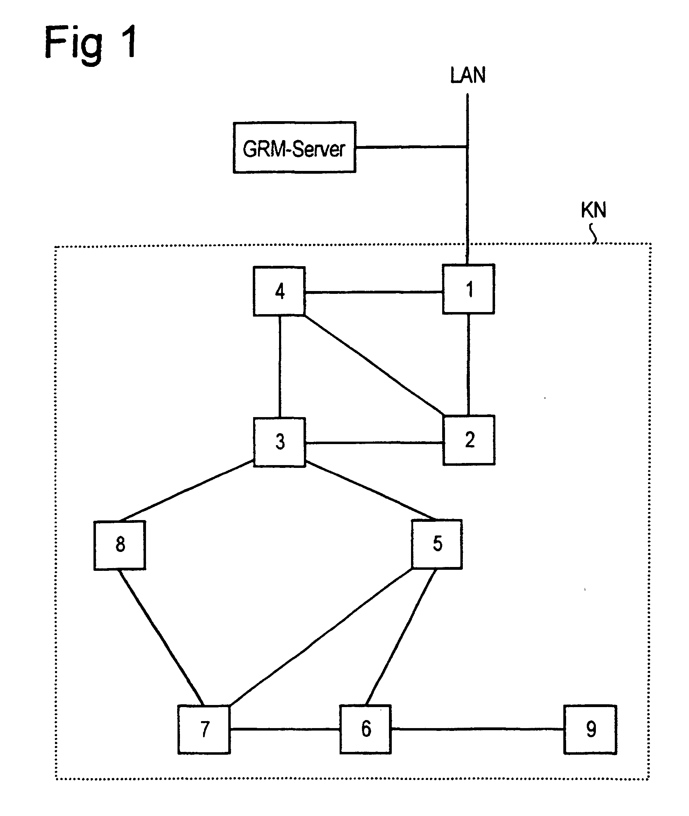

Fig. 1 zeigt ein Strukturbild eines beispielhaften Netzwerks KN, insbesondere eines verbindungsorientierten Netzwerks, anhand dessen die erfindungsgemäßen Verfahren im folgenden veranschaulicht werden. Das Netzwerk KN ist dabei beispielsweise ein ISDN-orientiertes Kommunikationsnetz. Das Netzwerk KN umfaßt insgesamt neun Netzknoten 1,...,9 die untereinander in der dargestellten Weise miteinander verbunden sind. Das Netzwerk KN weist dabei eine Reihe von ringförmigen und kettenförmigen Netzwerkstrukturen auf. Ein Netzknoten kann beispielsweise durch eine Kommunikationsanlage aber auch durch eine entsprechend ausgestaltete Datenverarbeitungseinrichtung, z.B. einen Personal Computer oder eine Workstation, realisiert sein.

Das Netzwerk KN ist über einen ersten Netzknoten 1 mit einem lokalen Netzwerk LAN verbunden. Eine Datenübermittlung über das lokale Netzwerk LAN erfolgt dabei gemäß dem IP-Protokoll (Internet Protocol). An das lokale Netzwerk LAN ist ein sogenannter GRM-Server (Global Routing Manager) angeschlossen, über den im vorliegenden Ausführungsbeispiel eine zentrale Administrierung von Knotennummern NODE-ID für die Netzknoten 1,...,9 des Netzwerks KN erfolgt. Anhand der Knotennummern NODE-ID ist eine Adressierung der einzelnen Netzknoten 1,...,9 untereinander auf einfache Weise möglich. Um eine eindeutige Adressierung innerhalb des Netzwerks KN gewährleisten zu können, ist es notwendig, daß die jeweiligen Knotennummern NODE-ID eindeutig sind.

Für eine Administrierung der den Netzknoten 1,...,9 des Netzwerks KN zugeordneten Knotennummern NODE-ID ist es erforderlich, daß der GRM-Server eine Information darüber erhält, welche Netzknoten 1,...,9 innerhalb des Netzwerks KN aktiv, d.h. am Netzwerk KN angemeldet sind. Für eine Kommunikation mit dem GRM-Server weist der erste Netzknoten 1 daher eine - nicht dargestellte - Kommunikationseinheit - in der Literatur häufig als GRM-Client bezeichnet - auf, über die die benötigten Informationen an den GRM-Server übermittelt werden.

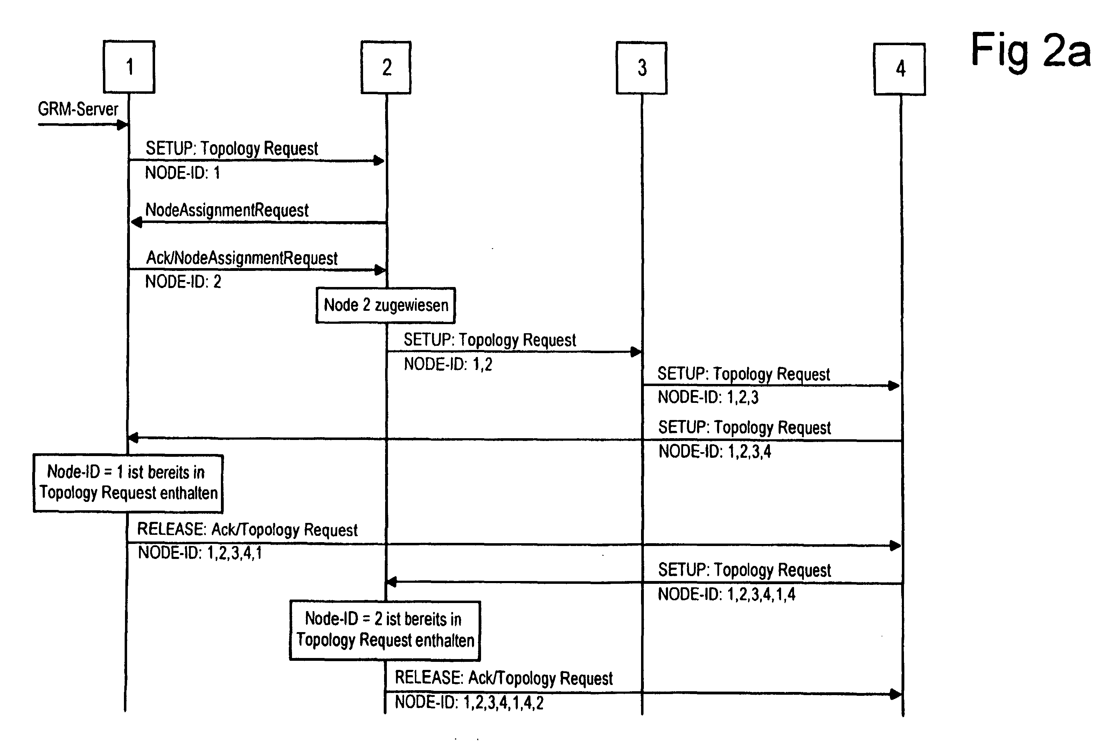

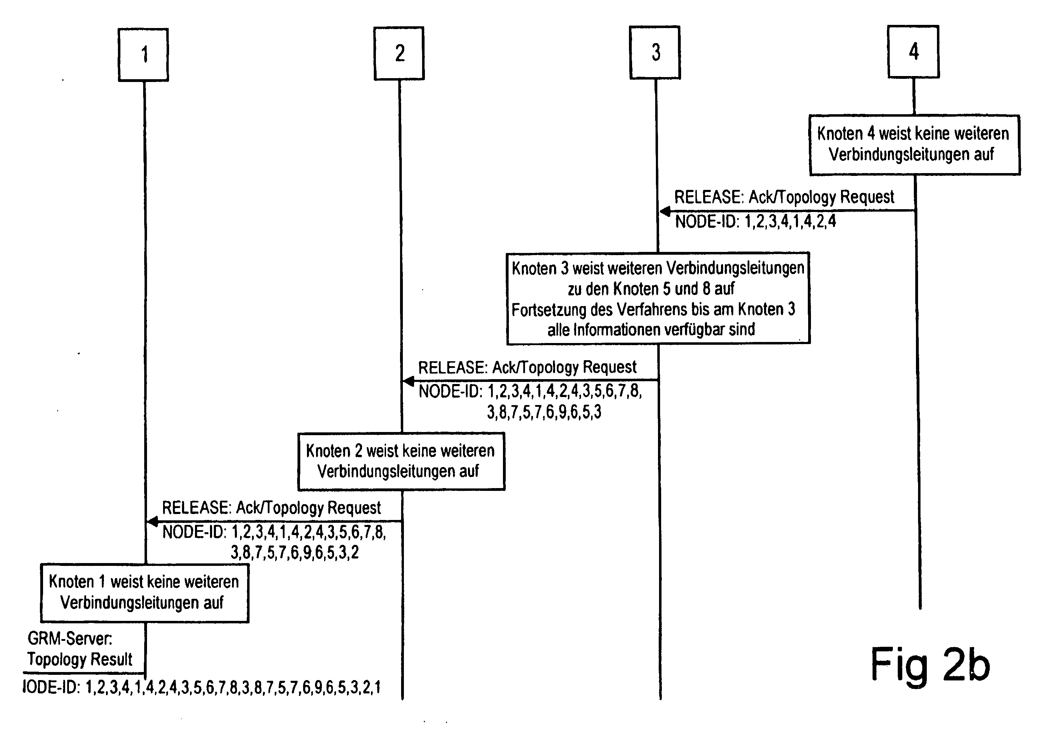

Fig. 2 - bestehend aus Fig. 2a und Fig. 2b, wobei sich Fig. 2b unmittelbar an Fig.2a anschließt - zeigt ein Ablaufdiagramm zur Veranschaulichung der im Rahmen des erfindungsgemäßen Verfahrens zur Ermittlung der am Netzwerk KN aktiven, bzw. angemeldeten Netzknoten 1,...,9 ablaufenden wesentlichen Verfahrensschritte. Beim vorliegenden Ausführungsbeispiel sind dabei nur die ersten vier Netzknoten 1,...,4 des Netzwerks KN dargestellt. Des weiteren wird davon ausgegangen, daß den Netzknoten 1,3,...,9 des Netzwerks KN, mit Ausnahme des zweiten Netzknotens 2 bereits eine Knotennummer NODE-ID zugewiesen ist.

Für eine Ermittlung der Netzwerktopologie ausgehend vom GRM-Server sendet dieser eine Anforderungsnachricht über das lokale Netzwerk LAN an den ersten Netzknoten 1, bzw. an die - nicht dargestellte - Kommunikationseinheit des ersten Netzknotens 1. Der erste Netzknoten 1, bzw. die - nicht dargestellte - Kommunikationseinheit des ersten Netzknotens 1 wandelt die Anforderungsnachricht z.B. vom IP-Protokoll in das ISDN-Protokoll um und sendet eine Meldung 'SETUP: Topology Request, NODE-ID: 1' an einen der mit dem ersten Netzknoten 1 verbundenen Netzknoten 2,4. Im vorliegenden Ausführungsbeispiel an den zweiten Netzknoten 2. Da dem zweiten Netzknoten 2 im Netzwerk KN noch keine Knotennummer NODE-ID zugewiesen wurde, sendet dieser eine Meldung 'NodeAssignmentRequest' an den ersten Netzknoten 1. Der erste Netzknoten 1 ermittelt daraufhin - durch einen Zugriff auf den GRM-Server - eine freie Knotennummer NODE-ID - im vorliegenden Ausführungsbeispiel die Knotennummer NODE-ID=2 - und sendet eine entsprechende Antwortmeldung 'Ack/NodeAssignmentRequest NODE-ID:2' an den zweiten Netzknoten 2. Dem zweiten Netzknoten 2 ist damit die Knotennummer NODE-ID=2 zugewiesen.

In einem nächsten Schritt trägt der zweite Netzknoten 2 seine Knotennummer NODE-ID=2 in die Anforderungsnachricht ein und sendet eine Meldung 'SETUP: Topology Request, NODE-ID: 1,2' an einen der mit dem zweiten Netzknoten 2 verbundenen Netzknoten 3,4. Im vorliegenden Ausführungsbeispiel an den dritten Netzknoten 3. Dieser trägt seine Knotennummer NODE-ID=3 in die Anforderungsnachricht ein und sendet eine Meldung 'SETUP: Topology Request, NODE-ID: 1,2,3' an einen der mit dem dritten Netzknoten 3 verbundenen Netzknoten 4,5,8. Im vorliegenden Ausführungsbeispiel an den vierten Netzknoten 4. Der vierte Netzknoten 4 trägt wiederum seine Knotennummer NODE-ID=4 in die Anforderungsnachricht ein und sendet eine Meldung 'SETUP: Topology Request, NODE-ID: 1,2,3,4' an einen der mit dem vierten Netzknoten 4 verbundenen Netzknoten 1,2. Im vorliegenden Ausführungsbeispiel an den ersten Netzknoten 1.

Der erste Netzknoten 1 erkennt, daß seine Knotennummer NODE-ID=1 bereits in der Anforderungsnachricht eingetragen ist. Daraufhin trägt der erste Netzknoten 1 erneut seine Knotennummer NODE-ID=1 in die Anforderungsnachricht ein und sendet eine Meldung 'RELEASE: Ack/Topology Request, NODE-ID: 1,2,3,4,1' zurück an den vierten Netzknoten 4. Dieser trägt erneut seine Knotennummer NODE-ID=4 in die Anforderungsnachricht ein und sendet eine Meldung 'SETUP: Topology Request, NODE-ID: 1,2,3,4,1,4' an den vorher nicht ausgewählten Netzknoten 2. Der zweite Netzknoten 2 erkennt ebenfalls, daß seine Knotennummer NODE-ID=2 bereits in der Anforderungsnachricht eingetragen ist und trägt daraufhin seine Knotennummer NODE-ID=2 in die Anforderungsnachricht ein und sendet eine Meldung 'RELEASE: Ack/Topology Request, NODE-ID: 1,2,3,4, 1,4,2' zurück an den vierten Netzknoten 4.

Der vierte Netzknoten 4 weist damit keine weiteren Verbindungsleitungen auf. Er trägt seine Knotennummer NODE-ID=4 erneut in die Anforderungsnachricht ein und sendet eine Meldung 'RELEASE: Ack/Topology Request, NODE-ID: 1,2,3,4,1,4,2,4' zurück an den dritten Netzknoten 3, vom dem er die Anforderungsmeldung ursprünglich erhalten hat. Der dritte Netzknoten 3 weist im Gegensatz zum vierten Netzknoten 4 weitere, noch nicht berücksichtigte Verbindungsleitungen zu den Netzknoten 5 und 8 auf und setzt das Verfahren mit den beschriebenen Verfahrensschritten fort. Das Verfahren wird dabei solange fortgesetzt, bis alle Informationen über das Teil-Netzwerk bestehend aus den Netzknoten 3,5,6,7,8,9 am dritten Netzknoten 3 verfügbar sind.

Der dritte Netzknoten weist damit keine weiteren Verbindungsleitungen auf. Er trägt daraufhin seine Knotennummer NODE-ID=3 erneut in die Anforderungsnachricht ein und sendet eine Meldung 'RELEASE: Ack/Topology Request, NODE-ID: 1,2,3, 4,1,4,2,4,3,5,6,7,8,3,8,7,5,7,6,9,6,5,3' zurück an den zweiten Netzknoten 2, vom dem er die Anforderungsmeldung ursprünglich erhalten hat. Der zweite Netzknoten weist damit ebenfalls keine weiteren, noch nicht berücksichtigte Verbindungsleitungen auf. Er trägt seine Knotennummer NODE-ID=2 in die Anforderungsnachricht ein und sendet eine Meldung 'RELEASE: Ack/Topology Request, NODE-ID: 1,2,3,4,1,4,2,4,3,5, 6,7,8,3,8,7,5,7,6,9,6,5,3,2' zurück an den ersten Netzknoten 1, vom dem er die Anforderungsmeldung ursprünglich erhalten hat. Der erste Netzknoten weist damit ebenfalls keine weiteren, noch nicht berücksichtigte Verbindungsleitungen auf. Er trägt daraufhin seine Knotennummer NODE-ID=1 in die Anforderungsnachricht ein und sendet abschließend eine Meldung 'GRM-Server: Topology Result, NODE-ID: 1,2,3,4,1,4,2,4,3,5,6,7, 8,3,8,7,5,7,6,9,6,5,3,2,1' an den GRM-Server. Der GRM-Server speichert die mittels der Anforderungsnachricht gewonnene Information über die Netzwerktopologie entsprechend in tabellarischer Form ab.

Die Meldungen der Anforderungsnachricht werden über eine Signalisierungsverbindung - in der Literatur häufig als 'Temporary Signaling Connection, kurz TSC bezeichnet - des Netzwerks KN - beispielsweise einen D-Kanal einer ISDN-Verbindung - übermittelt. Auf diese Weise werden nur geringe Übertragungskapazitäten innerhalb des Netzwerks KN belegt und es entstehen keine zusätzlichen Gebühren für die Ermittlung der Netzwerktopologie.

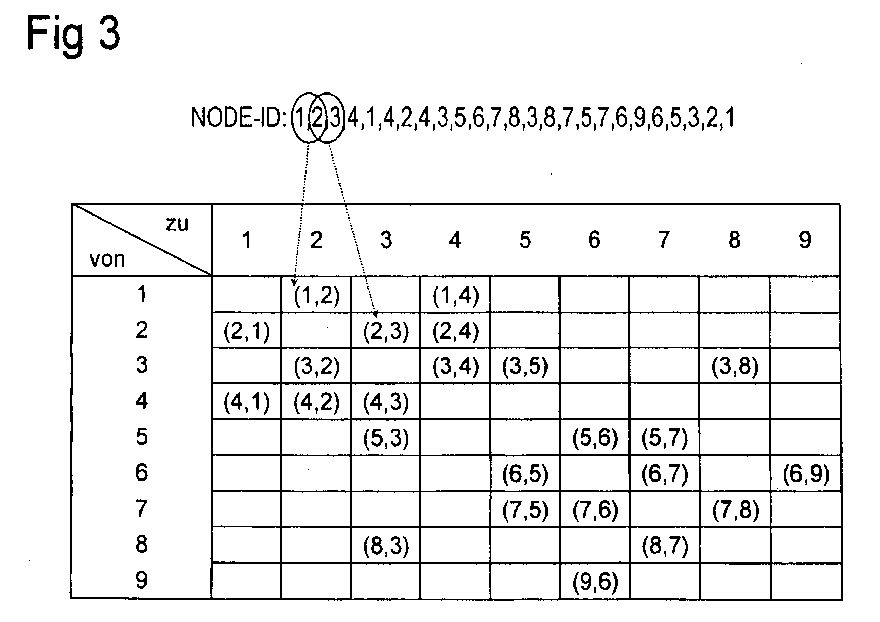

Fig. 3 zeigt nun eine die Netzwerktopologie des Netzwerks KN repräsentierende, Informationen über die Netzknoten 1,...,9 und die Verbindungsleitungen des Netzwerks KN umfassende Tabelle. Die Tabelle weist jeweils eine Zeile und eine Spalte für jeden Netzknoten 1,...,9 des Netzwerks KN auf, wobei in einer Zeile die von einem jeweiligen Netzknoten 1,...,9 abgehenden Verbindungsleitungen und in einer Spalte die an einem jeweiligen Netzknoten 1,...,9 eingehenden Verbindungsleitungen eingetragen sind. Beispielsweise ist der erste Netzknoten 1 jeweils über eine bidirektionale Verbindungsleitung sowohl mit dem zweiten als auch mit dem vierten Netzknoten 2,4 verbunden.

Durch den GRM-Server erfolgt eine Umsetzung der in Form von - in der Anforderungsnachricht enthaltenen - Knotennummern NODE-ID: 1,2,3,4,1,4,2,4,3,5,6,7,8,3,8,7,5,7,6,9,6,5,3,2,1 - in die beschriebene tabellarische Form. Hierzu wird die erste Knotenkombination 1,2 aus der Anforderungsnachricht ausgelesen und ein entsprechender Eintrag (1,2) in der ersten Zeile und zweiten Spalte der Tabelle eingefügt. Anschließend wird die nächste Knotenkombination 2,3 - bestehend aus der zweiten Knotennummer NODE-ID=2 der ersten Knotenkombination 1,2 und der nächsten in der Anforderungsnachricht enthaltenen Knotennummer NODE-ID=3 - aus der Anforderungsnachricht ausgelesen und ein entsprechender Eintrag (2,3) in der zweiten Zeile und dritten Spalte der Tabelle eingefügt. Dieses Verfahren wird fortgesetzt, bis alle in der Anforderungsnachricht enthaltenen Knotenkombinationen abgearbeitet sind.

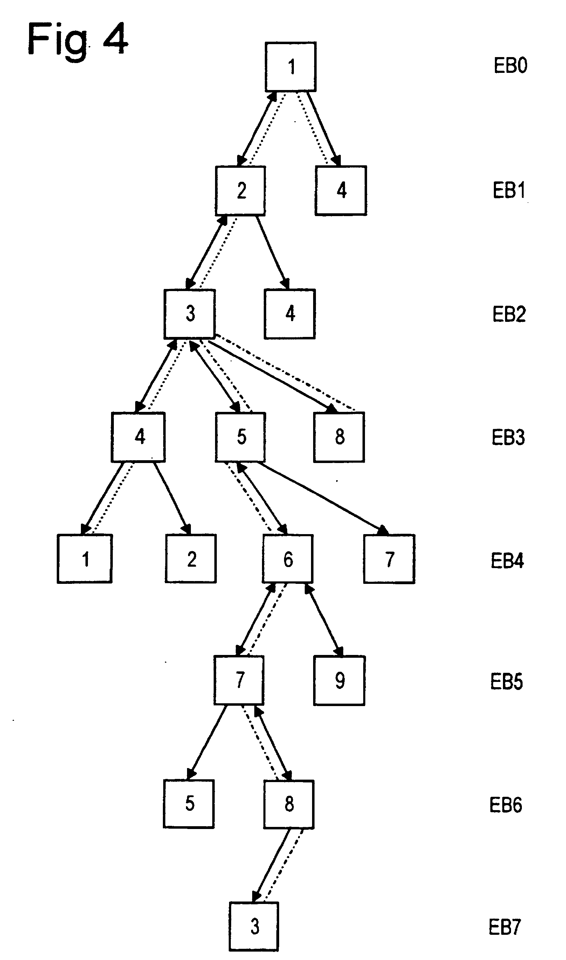

Fig. 4 zeigt nun ein Strukturbild für die Darstellung der Netzwerktopologie in Form einer Baumstruktur. Für eine Entwicklung der Baumstruktur aus der Tabelle wird ein beliebiger Netzknoten 1,...,9 des Netzwerks KN als Wurzel EB0 der Baumstruktur ausgewählt. Im vorliegenden Ausführungsbeispiel ist dies der erste Netzknoten 1.

Ausgehend vom ersten Netzknoten 1 als Wurzel EB0 der Baumstruktur werden in einer ersten Hierarchieebene EB1 der Baumstruktur diejenigen Netzknoten angeordnet, für die ein Eintrag in der dem ersten Netzknoten 1 zugeordneten Zeile der Tabelle vorhanden ist. Im vorliegenden Ausführungsbeispiel sind dies der zweite und der vierte Netzknoten 2,4. Nachfolgend werden die Verbindungen zwischen dem ersten Netzknoten 1 und dem zweiten und vierten Netzknoten 2,4 gemäß den Einträgen in der dem ersten Netzknoten 1 zugeordneten Zeile eingefügt. In einem nächsten Schritt werden ausgehend von einem der Netzknoten 2,4 der ersten Hierarchieebene EB1 - im vorliegenden Ausführungsbeispiel vom zweiten Netzknoten 2 - in einer zweiten Hierarchieebene EB2 der Baumstruktur diejenigen Netzknoten angeordnet, für die ein Eintrag in der dem zweiten Netzknoten 2 zugeordneten Zeile der Tabelle vorhanden ist, wobei diejenigen Spalten unberücksichtigt bleiben, die einem bereits berücksichtigten Netzknoten 1 zugeordnet sind. Im vorliegenden Ausführungsbeispiel sind dies der dritte und der vierte Netzknoten 3,4. Nachfolgend werden die Verbindungen zwischen dem zweiten Netzknoten 2 und dem ersten, dritten und vierten Netzknoten 3,4 gemäß den Einträgen in der dem zweiten Netzknoten 2 zugeordneten Zeile eingefügt. Das beschriebene Verfahren wird solange fortgesetzt bis alle Zeilen bzw. Spalten der Tabelle abgearbeitet sind, d.h. im vorliegenden Ausführungsbeispiel bis zu einer siebten Hierarchieebene EB7 der Baumstruktur.

Für eine Umsetzung der Netzwerktopologie des Netzwerks KN von der Baumstruktur in die reale Netzwerkstruktur wird die Baumstruktur ausgehend von der Wurzel EB0 nach Ringstrukturen, d.h. nach bidirektionalen Pfaden mit dem selben Anfangs- sowie Endpunkt, durchsucht. In der vorliegenden Baumstruktur sind mehrere Ringstrukturen enthalten. Beispielsweise ergibt sich ausgehend von der Wurzel EB0 der Baumstruktur ein bidirektionaler Pfad 1,2,3,4,1 (in der Figur durch die gepunktete Linie verdeutlicht). Des weiteren ergibt sich ausgehend von der zweiten Hierarchieebene EB2 ein bidirektionaler Pfad 3,5,6,7,8,3 (in der Figur durch die Strich-Punkt-Linie verdeutlicht).

Für eine Darstellung der Netzwerktopologie wird beginnend mit der größten Ringstruktur 3,5,6,7,8,3, d.h. demjenigen bidirektionalen Pfad mit den meisten Netzknoten, die Netzwerktopologie graphisch dargestellt. In einem zweiten Schritt wird die zweite Ringstruktur 1,2,3,4,1 mit dem gemeinsamen dritten Netzknoten 3 hinzugefügt. Abschließend werden die noch fehlenden Verbindungsleitungen 2-4, 5-7 und 6-9 hinzugefügt. Mittels des beschriebenen Verfahrens gelangt man auf einfache Art und Weise zu der in Fig. 1 dargestellten Netzwerktopologie des Netzwerks KN.

## Patentansprüche

1. Verfahren zur Ermittlung von Netzwerktopologien, bei dem ausgehend von einem ersten Netzknoten (1) eine Anforderungsnachricht an zumindest einen mit dem ersten Netzknoten (1) verbundenen zweiten Netzknoten (2) übermittelt wird, **dadurch gekennzeichnet, dass**
- der zweite Netzknoten (2) seine ihm im Netzwerk (KN) zugeordnete Knotennummer in die Anforderungsnachricht einträgt und die Anforderungsnachricht an zumindest einen mit dem zweiten Netzknoten (2) verbundenen dritten Netzknoten (3) weiterleitet,
- die Anforderungsnachricht solange weitergeleitet wird, bis alle im Netzwerk (KN) angeordneten Netzknoten (1,...,9) und sämtlichen die Netzknoten (1,...,9) verbindenden Verbindungsleitungen durchlaufen sind, und
- die Anforderungsnachricht an den ersten Netzknoten (1) zurückübermittelt wird und die in Form der in der Anforderungsnachricht eingetragenen Knotennummern vorhandene Information über die Netzwerktopologie abgespeichert wird.

2. Verfahren nach Anspruch 1,
**dadurch gekennzeichnet,**
**daß** in Fällen, in denen die Knotennummer des dritten Netzknotens (3) bereits in der Anforderungsnachricht eingetragen ist, der dritte Netzknoten (3) seine Knotennummer (NODE-ID=3) erneut in die Anforderungsnachricht einträgt und die Anforderungsnachricht an den zweiten Netzknoten (2) zurücksendet.

3. Verfahren nach Anspruch 2,
**dadurch gekennzeichnet,**
**daß** der zweite Netzknoten (2) seine Knotennummer ebenfalls erneut in die Anforderungsnachricht einträgt und diese an einen weiteren dritten Netzknoten (3) weiterleitet.

4. Verfahren nach Anspruch 3,
**dadurch gekennzeichnet**,
da**ß** in Fällen, in denen der zweite Netzknoten (2) keine Verbindungsleitungen mit weiteren dritten Netzknoten (3) aufweist, der zweite Netzknoten (2) die Anforderungsnachricht an den ersten Netzknoten (1) zurückübermittelt.

5. Verfahren nach einem der vorhergehenden Ansprüche,
**dadurch gekennzeichnet**,
da**ß** die Anforderungsnachricht über eine Signalisierungsverbindung innerhalb des Netzwerks (KN) übermittelt wird.

6. Verfahren nach einem der vorhergehenden Ansprüche,
**dadurch gekennzeichnet**,
da**ß** die Information über die Netzwerktopologie in tabellarischer Form abgespeichert wird, wobei zwei in der Anforderungsnachricht nacheinander eingetragene Knotennummern jeweils in einen Eintrag der Tabelle umgesetzt werden.

7. Verfahren nach Anspruch 6,
**dadurch gekennzeichnet**,
da**ß** die Tabelle in einer zentralen, mit dem ersten Netzknoten (1) verbundenen Datenverarbeitungseinrichtung abgespeichert wird.

8. Verfahren nach einem der vorhergehenden Ansprüche, **dadurch gekennzeichnet, dass** ausgehend von einer die Netzwerktopologie repräsentierenden, eine Information über Netzknoten (1,...,8) und Verbindungsleitungen des Netzwerks (KN) umfassenden Tabelle eine Netzwerktopologie in Form einer Baumstruktur entwickelt wird,
dass anhand der Baumstruktur ermittelt wird, ob die Netzwerktopologie einen ringförmiges Netzwerk umfaßt, und falls dies der Fall ist, ausgehend von demjenigen ringförmigen Netzwerk welches die größte Anzahl an Netzknoten umfaßt die Netzwerktopologie entwickelt wird, und
dass in Fällen, in denen die Netzwerktopologie kein ringförmiges Netzwerk umfaßt, eine Netzwerktopologie in Form eines kettenförmigen Netzwerks entwickelt wird.

9. Verfahren nach Anspruch 8,
**dadurch gekennzeichnet**,
- da**ß** für die Entwicklung der Baumstruktur ausgehend von einem ersten Netzknoten (1) als Wurzel (EB0) der Baumstruktur in einer nächsten Hierarchieebene (EB1) der Baumstruktur zweite Netzknoten (2,4) angeordnet werden, für die ein Eintrag in der dem ersten Netzknoten (1) zugeordneten Zeile der Tabelle vorhanden ist und nachfolgend Verbindungen vom ersten Netzknoten (1) zu den zweiten Netzknoten (2,4) eingefügt werden,
- da**ß** ausgehend von einem der zweiten Netzknoten (2,4) in einer weiteren nächsten Hierarchieebene (EB2) der Baumstruktur dritte Netzknoten (3,4) angeordnet werden, für die ein Eintrag in der dem zweiten Netzknoten (2) zugeordneten Zeile der Tabelle vorhanden ist, wobei diejenigen Spalten unberücksichtigt bleiben, die einem bereits berücksichtigten Netzknoten (1,2) zugeordnet sind und nachfolgend Verbindungen vom zweiten Netzknoten (2) zum ersten und dritten Netzknoten (1,3,4) eingefügt werden, und
- da**ß** das Verfahren fortgesetzt wird, bis alle Zeilen der Tabelle abgearbeitet sind.

10. Verfahren nach Anspruch 8 oder 9,
**dadurch gekennzeichnet**,
da**ß** für die Ermittlung, ob die Netzwerktopologie einen ringförmiges Netzwerk umfaßt derjenige bidirektionale Pfad mit den meisten Netzknoten (3,5,6,7,8,3) innerhalb der Baumstruktur ermittelt wird.

## Claims

1. Method for ascertaining network topologies,
in which a request message is transmitted from a first network node (1) to at least one second network node (2) connected to the first network node (1), **characterized in that**
- the second network node (2) enters its associated node number in the network (KN) into the request message and forwards the request message to at least one third network node (3) connected to the second network node (2),
- the request message is forwarded until all the network nodes (1,...,9) arranged in the network (KN) and all connecting lines connecting the network nodes (1,...,9) have been passed through, and
- the request message is transmitted back to the first network node (1) and the network topology information, available in the form of the node numbers entered in the request message, is stored.

2. Method according to Claim 1,
**characterized**
**in that**, in cases in which the node number of the third network node (3) has already been entered in the request message, the third network node (3) enters its node number (NODE-ID = 3) into the request message again and sends the request message back to the second network node (2).

3. Method according to Claim 2,
**characterized**
**in that** the second network node (2) likewise enters its node number into the request message again and forwards the request message to a further third network node (3).

4. Method according to Claim 3,
**characterized**
**in that**, in cases in which the second network node (2) has no connecting lines to further third network nodes (3), the second network node (2) transmits the request message back to the first network node (1).

5. Method according to one of the preceding claims,
**characterized**
**in that** the request message is transmitted via a signalling connection within the network (KN).

6. Method according to one of the preceding claims,
**characterized**
**in that** the information about the network topology is stored in tabular form, with two node numbers entered in succession in the request message being respectively converted into an entry of the table.

7. Method according to Claim 6,
**characterized**
**in that** the table is stored in a central data processing device (GRM server) connected to the first network node (1).

8. Method according to one of the preceding claims,
**characterized in that** a network topology in the form of a tree structure is developed from a table which represents the network topology and comprises information about network nodes (1,...,8) and connecting lines of the network (KN),
**in that** the tree structure is used to ascertain whether the network topology comprises an annular network, and
if this is the case, the network topology is developed from that annular network which comprises the greatest number of network nodes, and
**in that**, in cases in which the network topology does not comprise an annular network, a network topology in the form of a chain-like network is developed.

9. Method according to Claim 8,
**characterized**
- **in that**, to develop the tree structure, starting from a first network node (1) as the root (EB0) of the tree structure, second network nodes (2, 4), for which there is an entry available in the table's row associated with the first network node (1), are arranged in a next hierarchical level (EB1) of the tree structure, and then connections from the first network node (1) to the second network nodes (2, 4) are inserted,
- **in that**, starting from one of the second network nodes (2, 4), third network nodes (3, 4), for which there is an entry available in the table's row associated with the second network node (2), are arranged in a further next hierarchical level (EB2) of the tree structure, ignoring those columns which are associated with a network node (1, 2) which has already been taken into account, and then connections from the second network node (2) to the first and third network nodes (1, 3, 4) are inserted, and
- **in that** the method is continued until all the rows in the table have been processed.

10. Method according to Claim 8 or 9,
**characterized**
**in that**, to ascertain whether the network topology comprises an annular network, that bidirectional path which has the most network nodes (3, 5, 6, 7, 8, 3) within the tree structure is ascertained.

## Revendications

1. Procédé de détermination de topologies de réseau,
dans lequel on transmet à partir d'un premier noeud de réseau (1 ) un message de demande vers au moins un deuxième noeud de réseau (2) relié au premier noeud de réseau (1),
**caractérisé par le fait que**
- le deuxième noeud de réseau (2) enregistre dans le message de demande son numéro de noeud qui lui est attribué dans le réseau (KN) et il retransmet le message de demande vers au moins un troisième noeud de réseau (3) relié au deuxième noeud de réseau (2),
- on retransmet le message de demande jusqu'à ce que tous les noeuds de réseau (1 à 9) placés dans le réseau (KN) et toutes les lignes de liaison reliant les noeuds de réseau (1 à 9) soient parcourus, et
- on renvoie le message de demande au premier noeud de réseau (1) et on mémorise l'information concernant la topologie de réseau et présente sous la forme des numéros de noeuds enregistrés dans le message de demande.

2. Procédé selon la revendication 1,
**caractérisé par le fait que**, dans les cas dans lesquels le numéro de noeud du troisième noeud de réseau (3) est déjà enregistré dans le message de demande, le troisième noeud de réseau (3) enregistre son numéro de noeud (NODE-ID = 3) à nouveau dans le message de demande et il renvoie le message de demande au deuxième noeud de réseau (2).

3. Procédé selon la revendication 2,
**caractérisé par le fait que** le deuxième noeud de réseau (2) enregistre également à nouveau son numéro de noeud dans le message de demande et retransmet celui-ci à un autre troisième noeud de réseau (3).

4. Procédé selon la revendication 3,
**caractérisé par le fait que**, dans les cas dans lesquels le deuxième noeud de réseau (2) n'a pas de lignes de liaison vers d'autres troisièmes noeuds de réseau (3), le deuxième noeud de réseau (2) renvoie le message de demande au premier noeud de réseau (1).

5. Procédé selon l'une des revendications précédentes,
**caractérisé par le fait que** le message de demande est transmis par l'intermédiaire d'une liaison de signalisation à l'intérieur du réseau (KN).

6. Procédé selon l'une des revendications précédentes,
**caractérisé par le fait que** l'information concernant la topologie de réseau est mémorisée sous forme de tableau, deux numéros de noeuds enregistrés l'un après l'autre dans le message de demande étant transformés à chaque fois en un enregistrement dans le tableau.

7. Procédé selon la revendication 6,
**caractérisé par le fait que** le tableau est mémorisé dans une installation de traitement de données centrale reliée au premier noeud de réseau (1).

8. Procédé selon l'une des revendications précédentes,
**caractérisé par le fait que**
à partir d'un tableau représentant la topologie de réseau et comprenant une information sur des noeuds de réseau (1 à 8) et des lignes de liaison du réseau (KN), on développe une topologie de réseau sous la forme d'une structure arborescente,
à l'aide de la structure arborescente, on détermine si la topologie de réseau comprend un réseau de forme annulaire, et
si c'est le cas, à partir du réseau de forme annulaire qui comprend le plus grand nombre de noeuds de réseau, on développe la topologie de réseau, et
dans les cas dans lesquels la topologie de réseau ne comprend pas de réseau de forme annulaire, on développe une topologie de réseau sous la forme d'un réseau en forme de chaîne.

9. Procédé selon la revendication 8,
**caractérisé par le fait que**
- pour le développement de la structure arborescente à partir d'un premier noeud de réseau (1) comme racine (EB0) de la structure arborescente, on place dans un niveau hiérarchique suivant (EB1) de la structure arborescente des deuxièmes noeuds de réseau (2, 4) pour lesquels il existe un enregistrement dans la ligne, attribuée au premier noeud de réseau (1), du tableau et on insère ensuite des liaisons du premier noeud de réseau (1) aux deuxièmes noeuds de réseau (2, 4),
- à partir de l'un des deuxièmes noeuds de réseau (2, 4), on place dans un autre niveau hiérarchique suivant (EB2) de la structure arborescente des troisièmes noeuds de réseau (3, 4) pour lesquels il existe un enregistrement dans la ligne, attribuée au deuxième noeud de réseau (2), du tableau, sachant qu'on ne tient pas compte des colonnes qui sont associées à un noeud de réseau (1, 2) déjà pris en compte et on insère ensuite des liaisons du deuxième noeud de réseau (2) au premier et au troisième noeud de réseau (1, 3, 4), et
- on poursuit le procédé jusqu'à ce que toutes les lignes du tableau soient traitées.

10. Procédé selon la revendication 8 ou 9,
**caractérisé par le fait que**, pour déterminer si la topologie de réseau comprend un réseau de forme annulaire, on détermine le chemin bidirectionnel avec le plus de noeuds de réseau (3, 5, 6, 7, 8, 3) à l'intérieur de la structure arborescente.
